# EUROPÄISCHE PATENTANMELDUNG

(11) **EP 3 528 068 A1**
(43) Veröffentlichungstag der Anmeldung: **21.08.2019**
(21) Anmeldenummer: 19157401.1
(22) Anmeldetag: 15.02.2019
(51) Int. Cl.: G05B 19/409

(54) **VERFAHREN UND VORRICHTUNG ZUR UNTERSTÜTZUNG ODER DURCHFÜHRUNG EINES SCHNEIDPROZESSES**

(30) Priorität: 15.02.2018 DE 102018001175
(71) Anmelder: Capex Invest GmbH, 33607 Bielefeld (DE)
(72) Erfinder: Bruder, Manuel, 33739 Bielefeld (DE)
(74) Vertreter: Roche, von Westernhagen & Ehresmann

(57) **Zusammenfassung**

Beschrieben und dargestellt ist ein Verfahren zur Unterstützung oder Durchführung eines Schneidprozesses flächiger oder blockförmiger, vorzugsweise biegeschlaffer, Körper (11), insbesondere technischer- oder nichttechnischer Textilien oder Tierhäute, umfassend die Schritte
• Anordnen eines Displays (28) an einem Nutzer (23) in dessen Sichtfeld, insbesondere nach Art einer Datenbrille (24), und
• Anzeigen von den Schneidprozess des Körpers (11) betreffenden Informationen auf dem Display (28).

## Beschreibung

Die Erfindung betrifft gemäß einem ersten Aspekt ein Verfahren zur Unterstützung oder Durchführung eines Schneidprozesses flächiger oder blockförmiger Körper. Diese sind insbesondere biegeschlaff. Es kann sich bei diesen Körpern beispielsweise um technische oder nicht-technische Textilien oder um Tierhäute handeln.

Derartige Körper werden nach Vorgabe hinsichtlich spezieller Formen zugeschnitten, d.h. aus den Körpern können beispielsweise bestimmte Zuschnittteile herausgeschnitten werden, welche anschließend entnommen und weiterverarbeitet werden.

So können beispielsweise Lederhäute derart geschnitten werden, dass man ihnen nach dem Schneidprozess vorgeformte Zuschnittteile entnehmen kann, welche dann beispielsweise zu Ledersitzen oder - möbeln oder Ähnlichem weiterverarbeitet werden.

Das gesamte Verfahren betrifft dabei nicht lediglich den Schneidprozess sondern auch dessen Vorbereitung, Nachbereitung oder Unterstützung: So kann ein Körper, wie beispielsweise eine Lederhaut typischerweise Fehlerstellen aufweisen (insbesondere nach Art von Falten, Narben oder Ähnlichem), welche später natürlich nicht in den entsprechenden Zuschnittteilen liegen dürfen.

Daher umfasst das Verfahren zunächst eine Fehlerstellenerkennung, welche im Stand der Technik typischerweise manuell oder jedenfalls mit manueller Unterstützung durchgeführt wird. Hierzu kann ein Nutzer gemäß dem Stand der Technik die Fehlerstellen auf dem Leder beispielsweise, händisch mit Hilfe bestimmter Farben, markieren oder an einem separaten Rechner aufgenommene Fehlerstellen mit Hilfe einer Computermaus umranden oder Ähnliches.

Anschließend erfolgt dann typischerweise ein Nesting-Prozess, also ein Prozess, bei dem die auszuschneidenden Formen derart manuell oder computergestützt auf einer Aufnahme des Körpers platziert werden, dass ein anschließender Zuschnitt eine möglichst maximale Ausnutzung des Körpers erlaubt: So werden entsprechende Formen für die späteren Zuschnittteile naturgemäß außerhalb der markierten Fehlerstellen platziert, dies aber möglichst bei einer hohen Materialsausnutzung in dem Sinne, dass wenig übrig bleibendes Ausschussmaterial des Körpers entsteht.

Typischerweise wird nach der Durchführung einer entsprechenden Fehlerstellenerkennung oder auch nach Durchführung eines entsprechenden Nestingschrittes der Körper von einer Auflagefläche genommen und in einem beliebigen zeitlichen Abstand auf einer Schneidfläche platziert. Hierbei wird der vor der Fehlerstellenerkennung bereits durch eine Kamera aufgenomme Umriss des Körpers auf die Schneidefläche projiziert und ein Nutzer kann den Körper manuell ausrichten.

Nach Durchführung des Zuschnittes erfolgt dann typischerweise eine manuelle Entnahme durch einen oder mehrere Nutzer und ein Absortieren der entnommenen Zuschnittteile.

Alle diese Arbeitsschritte, welche der Unterstützung oder Durchführung des Schneidprozesses dienen, weisen dabei typischerweise manuelle Komponenten auf, welche sich hinsichtlich des Ergebnisses zwar als relativ zuverlässig herausgestellt haben, welche aber hinsichtlich eines zügigeren und somit ökonomischeren Arbeitsablaufes optimierbar erscheinen.

Die der Erfindung zugrunde liegende Aufgabe besteht demnach darin, ein entsprechendes Verfahren zu vereinfachen.

Die Erfindung löst die gestellte Aufgabe gemäß dem Hauptaspekt der Erfindung mit den Merkmalen des Patentanspruches 1 und demnach insbesondere durch die folgenden Schritte:
- Anordnen eines Displays an einem Nutzer in dessen Sichtfeld, insbesondere nach Art einer Datenbrille, und
- Anzeigen von den Schneidprozess des Körpers betreffenden Informationen auf dem Display.

Mit anderen Worten besteht die Idee der Erfindung darin, eine Informationen über den Schneidprozess darstellende Anzeige in das Sichtfeld eines Nutzers einzublenden. Diese Anzeige kann dabei verschiedene Arbeitsschritte bei der Vorbereitung oder Durchführung des Schneidprozesses des Körpers betreffen. Beispielsweise können Konturlinien von aus dem Körper herauszuschneidenden Formen angezeigt oder positioniert werden oder ein Ausnutzungsgrad oder die Sollposition des Körpers vor dem eigentlichen Schneidvorgang oder eine Entnahmereihenfolge für Teile aus dem geschnittenen Körper oder Ähnliches.

All dies kann mit Hilfe einer Einheit geschehen, welche das Display bereitstellt, vorzugsweise einer Datenbrille, wie sie von unterschiedlichen Firmen bereits angeboten und vertrieben wird.

Alternativ zu einer Datenbrille ist aber auch eine andere an einem Nutzer anordenbare Einheit vorstellbar, wie beispielsweise ein Notepad, welches sich der Nutzer umhängt oder Ähnliches. Entscheidend ist hierbei, dass das Display mit dem Nutzer mitbewegt wird und sich insbesondere in dessen Sichtfeld befindet. Eine Datenbrille scheint hierfür prädestin iert.

Bei den angezeigten Informationen kann es sich beispielsweise um globale, allgemeine, also ortsungebundene Informationen handeln, wie beispielsweise den Ausnutzungsgrad bei einem Nestingprozess. Solcherlei Daten können beispielsweise in einer herkömmlichen, einfachen Datenbrille, insbesondere in einem sogenannten "Head-up-Display" einfach, positionsungebunden angezeigt werden. Derartige globale Informationen sind dabei hinsichtlich der Realität (im Sichtfeld des Nutzers) oder hinsichtlich einer Bewegung der ein Display aufweisenden Einheit nicht positionsgebunden, müssen also typischerweise nicht nachjustiert werden. Diese Informationen werden somit nicht integral in die Realität oder die Darstellung der Realität eingebunden, sondern können dem Nutzer Hilfestellungen, beispielsweise Anweisungen, bereitstellen, die dieser in den Arbeitsschritten berücksichtigen kann, ohne dass er beispielsweise vom zu schneidenden Körper aufblicken muss (auf einen separaten Monitor oder Ähnliches).

Mit einer sogenannten "augmented reality" hat dieser erstgenannte exemplarische Einsatz im strengen Sinne nichts zu tun. Vielmehr handelt es sich mehr oder weniger um einen "schwebenden Bildschirm", welcher insbesondere durch eine Head-up-Display-Brille bereitgestellt werden kann, wie sie beispielsweise die Firma Google mit dem Produktnamen "Google Glass" bereitstellt. In diesem Sinne können beispielsweise Schritt für Schritt Anleitungen angezeigt werden, beispielsweise für die Entnahme der bereits aus dem Körper ausgeschnittenen Zuschnittteile oder Ähnliches.

Alternativ oder zusätzlich kann aber auch ein Display mit sogenannter "augmented reality"-Funktion eingesetzt werden, bei welchen das reale oder real (vom Gehirn) wahrgenommene Bild passgenau von Objekten, insbesondere 3D-Objekten, überlagert wird. Hierbei stehen reale und virtuelle Objekte dreidimensional zueinander in Bezug. Bei diesen Informationen handelt es sich um ortsgebundene Informationen, wie beispielsweise eine Konturlinie auf dem Körper oder eine Umrisslinie des Körpers, welche bei einer Bewegung des Displays automatisch nachjustiert werden müssen: Wird beispielsweise auf dem Display eine Konturlinie dargestellt und das Display bewegt, muss die neue Lage der Konturlinie bzw. Information nachberechnet und auf dem Display nachjustiert werden. Somit ergibt sich für den Nutzer der Eindruck, dass die Konturlinie / Information stets an demselben realen Ort verbleibt, wobei sie aber auf dem Display ihre (Absolut-) Position oder Lage ändert, da sich der Blickwinkel des Displays auf den Körper geändert hat.

Für einen derartigen Einsatz eines "augmented-reality"-Verfahrens wird typischerweise ebenfalls eine Datenbrille verwendet, insbesondere eine sogenannte "augmented-reality"-Datenbrille, beispielsweise eine der Firma Microsoft mit dem Produktnamen "Hololens". Es sei angemerkt, dass entsprechende erfindungsgemäße Brillen auch als Mixed-Reality-Brillen bezeichenbar sind.

"Augmented-reality"-Funktionen können aber selbstverständlich auch bei anderen Einheiten, beispielsweise bei einem umgehängten Tabletcomputer, benutzt werden.

Wird eine Datenbrille in dem erfindungsgemäßen Verfahren eingesetzt, so stellt die Brille selber typischerweise das Display bereit. Hierbei wird, je nach Einsatzfall, entweder ein Großteil oder die Gänze der Brillenblende (der Teil der Brille, der auch als Brillenglas bezeichnet wird) als Display verwendet, oder in anderen Fällen ein sogenanntes Mikrodisplay (insbesondere in nicht-"augmented-reality"-Einsatzfällen), welches in der Brille - insbesondere entfernt von der Blende - angeordnet sein kann. Im letztgenannten Fall kann es auch sein, dass das Display nur einen geringen Teil des Sichtfeldes des Nutzers ausfüllt.

Wie gesagt sind anstelle einer Datenbrille dem Grunde nach auch andere Gerätschaften einsetztbar, wie beispielsweise ein Tablet, Notepad oder ein Datenhelm oder Ähnliches. Vorzugsweise bewegt sich das Display aber mit dem Kopf des Nutzers mit und kann in diesem Sinne insbesondere am Kopf des Nutzers angeordnet sein, also beispielsweise mit einer Befestigung in Form einer Brille, eines Bügels oder eines Helms.

Unabhängig von der genauen Positionierung werden dem Nutzer auf dem Display Informationen über den Schneidprozess des Körpers angezeigt. Hierbei kann es sich um live- oder sogenannte "on-the-Fly"-Informationen handeln, wie beispielsweise den aktuellen Ausnutzungsgrad während eines Nesting-Vorgangs oder die Anzahl der noch zu platzierenden Teile und/oder um Nicht-Live-Informationen, wie beispielsweise die grundsätzliche Anzahl an zu platzierenden Ausschnittformen oder die mindestens zu erzielende Ausnutzung oder Ähnliches.

Informationen, die den Schneidprozess des Körpers betreffen, sind insbesondere sämtliche Informationen, welche mit einer Fehlerstellenerkennung, einem Nesting-Vorgang, dem eigentlichen Zuschnitt oder der Entnahme der Zuschnittteile oder deren Absortierung zu tun haben. Das zur Durchführung des Verfahrens genutzte System, insbesondere eine Einheit, welcher das Display zugeordnet ist, kann hierbei insbesondere zwischen verschiedenen Arbeitsmodi für die unterschiedlichen beschriebenen Arbeitsschritte schaltbar sein oder diese automatisch oder nutzerausgelöst durchlaufen.

Vorzugsweise umfassen die Informationen, wie später noch genauer beschrieben werden wird, auch Konturlinien, insbesondere jene der aus dem Körper auszuschneidenden Teile. Diese können von einem Nutzer vorzugsweise sogar verschoben oder neu- oder umplatziert werden, wobei eine derartige Bewegung beispielsweise mit Hilfe eines separaten Eingabesystems, wie einer Maus oder Ähnlichem, oder komfortabler mit Hilfe einer Bewegungs- oder Gestenerkennung durchführbar ist, welche später noch beschrieben werden wird. Gleiches gilt für die Steuerung der Benutzeroberfläche des Displays, welche beispielsweise mit Hilfe eines separaten Eingabegerätes, wie einer Maus, eines Joysticks, eines Trackballs, eines Touchpads oder Ähnlichem durchgeführt werden kann oder mit Hilfe einer Bewegungs- oder Gestenerkennung /-steuerung. Auch ist eine reine Sprachsteuerung der Benutzeroberfläche des Displays, insbesondere der Datenbrille, eine Möglichkeit.

Wie beschrieben können Konturlinien Teil der Informationen sein oder diese komplett ausbilden. Diese werden insbesondere im Fall einer "augmented-reality"-Anwendung verfügbar sein. Unabhängig von dem Anwendungsfall können die Informationen aber auch globale Daten oder Anzeigen enthalten, wie beispielsweise die Form oder Anzahl noch zu platzierender Zuschnittteile, Reihenfolgemarkierungen (wie Buchstaben oder Zahlen), farbliche Kodierungen (insbesondere kann zur Erstellung einer Konturlinie selbstverständlich eine Fläche farblich markiert oder mit Helligkeitseffekten gehighlightet werden oder Ähnliches). Auch können Steuerungselemente angezeigt werden.

Ferner ist es besonders vorteilhaft, wenn die dem Display zugeordnete Einheit, beispielsweise die Datenbrille, Erfassungsmittel aufweist, wie eine Kamera oder einen Sensor, welcher vom Nutzer initierte bzw. durchgeführte Bewegungen erkennen kann. Auf diese Weise wird beispielsweise eine Gestensteuerung der Benutzeroberfläche des Displays möglich. So kann beispielsweise der Verschiebevorgang einer virtuellen Konturlinie mit Hilfe einer Handbewegung im Bereich des Körpers oder im Blickfeld des Nutzers erfolgen.

Auch bestimmte Arbeitsmodi oder Auswahlen in der Benutzeroberfläche des Displays sind durch (gegebenenfalls vorher einprogrammierte) Gesten auslösbar oder steuerbar. Typischerweise kann hierbei eine Hand-, Finger- und/oder Armbewegung als Geste verstanden werden, insbesondere des Nutzers. Andererseits kann auch ein bestimmter, von der Einheit zu erkennender Gegenstand, wie beispielsweise ein spezieller stiftartiger Körper oder Ähnliches bewegt werden, welcher von der Einheit, insbesondere einer Datenbrille, erkannt werden kann. Schließlich ist es auch möglich, dass ein Infrarotstift oder Ähnliches über den Körper geführt wird, welcher von den Sensoren der Einheit nachverfolgt werden kann.

Die Informationen können sich insbesondere auch auf dem eigentlichen Schneidprozess nachgelagerte Prozesse beziehen, wie beispielsweise das Absortieren der vorher ausgeschnittenen bzw. ausgestanzten Zuschnittsteile. Beispielsweise können bestimmte Ablageorte in räumlicher Nähe oder einiger Entfernung zum Schneidtisch in die Informationsverarbeitung und in die Informatioansanzeige miteinbezogen werden. In diesem Sinn kann beispielsweise ein Nutzer, welcher Teile aus dem geschnittenen Körper entnimmt, zu einem Regal oder einer Ablage durch das Display Hinweise erhalten, welches deren Fächer er zur Ablage zu nutzen hat. Beispielsweise kann ein Fach farblich markiert sein oder es kann auch nur ein textlicher Hinweis auf die Nummer oder die Art des Faches im Display eingeblendet werden. Dies gehört im Sinne der Erfindung zur Unterstützung des Schneidprozesses dazu.

Bei der Durchführung des erfindungsgemäßen Verfahrens wird der Körper typischerweise geschnitten, beispielsweise mit Hilfe einer mechanischen Schneideinheit, wie einen Stich- oder Rollmesser, oder auch mit einem Wasserstrahlschneider, einem Lasercutter, einem oder mehreren Stanzeisen (im Sinne der Erfindung soll ein Schneiden insbesondere auch ein Stanzen umfassen) oder Ähnlichem.

Bei dem auf diese Weise zu schneidenden Materialien bzw. dem Körper handelt es sich vorzugsweise um biegeschlaffe Körper, typischerweise flächige nach Art von Leder- oder Tierhäuten. Diese weisen typischerweise Fehlerstellen auf, wie Mastfalten, Narben oder Ähnliches, was es zu berücksichtigen gilt. Doch auch klassische Textilien, wie beispielsweise Rapportstoffe können aufgrund ihres Materials oder ihrer Musterung Fehler aufweisen, die es zu berücksichtigen gilt. Grundsätzlich sind von dem erfindungsgemäßen Verfahren aber auch andere, insbesondere flächige, Materialien betroffen, wie technische Textilien, beispielsweise Composits, Abstandsgewebe, Folien, Laminat oder Ähnliches. Es handelt sich mithin typischerweise also nicht um derart harte Materialien, wie Aluminium oder Ähnliches, welche nicht zumindest mit einem Reinwasserstrahl schneidbar sind, sondern im Wesentlichen um mehr oder weniger weiche Materialien oder blockförmige Materialien. Bei den technischen Textilien kann es sich hierbei insbesondere um Funktionstextilien, Hochleistungstextilien, industrielle Textilien oder Ähnliches handeln. Der Begriff "technische Textilien" versteht sich insbesondere in Abgrenzung zu den tradionellen Bekleidungstextilien und Heimtextilien. Der typischste Anwendungsfall ist aber wohl der Einsatz bei Tierhäuten, also bei Ledern verschiedenster Güte und Veredelungsstufe.

Die Körper sind hierbei typischerweise biegeschlaff, weisen also geringe Dehnsteifigkeit und große Verformungen infolge geringer Kraft-Momentbeanspruchungen auf. Insbesondere können die Körper auch forminstabil, formlabil oder jedenfalls nicht formstabil genannt werden. Die flächen- und blockförmigen Körper haben dabei in der Regel eine mehr oder weniger plane Oberseite. Bei den blockförmigen Körpern kann es sich beispielsweise um (Vlies-)platten, oder auch Polster, Matratzen wie Styropor oder Kunststoffplatten, z.B. aus Gummi, oder Ähnliches handeln.

Der Vollständigkeit halber ist anzumerken, dass die angeführten Verfahrensschritte vorzugsweise in chronologischer Reihenfolge durchzuführen sind.

Gemäß einer besonders vorteilhaften Ausgestaltung des erfindungsgemäßen Verfahrens sind dem Display Erfassungsmittel zugeordnet, insbesondere optische. Hierbei kann es sich beispielsweise um eine Kamera und/oder um einen optischen Sensor handeln, mit welchem der Körper bzw. die Umgebung des Körpers erfassbar ist, vorzugsweise dreidimensional. Eine dreidimensionale Erfassung ist für den "augmented-reality"-Einsatz besonders vorteilhaft, da die eingeblendeten, ortsgebundenen Informationen so erst nachjustierbar bzw. nachführbar werden.

Erfassungsmittel sind aber auch bei einem herkömmlichen Einsatz, wie bei einem Head-up-Display, welches keine "augmented-reality" nutzt, sinnvoll, da sie Informationen über die Umgebung erfassen können und selbst in einer Nicht-"augmented-reality"-Einblendung gewisse Zustände oder Bewegungen auswerten lassen und in die (globalen) Informationen auf nicht räumliche geometrische Weise einfließen lassen können. Entsprechende Erfassungsmittel können insbesondere an der Einheit angeordnet sein, welche auch das Display umfasst, vorzugsweise also in die Datenbrille integriert sein.

Der Einsatz optischer Erfassungsmittel ermöglicht insbesondere eine Bewegungs- oder Gestenerkennung.

In diesem Sinne kann der Nutzer typischerweise mit seiner Hand oder seinem Arm oder Fingern Gesten durchführen, welche von den optischen Sensoren bzw. der Kamera erkannt werden. Diese können ausgewertet und in Kommandos zur Steuerung der Benutzeroberfläche des Displays umgesetzt werden. Auf diese Weise kann der Nutzer Bewegungen mit seinen Armen oder Händen oder Zeigeinstrumenten oder Ähnlichem durchführen, um beispielsweise virtuelle Konturlinien zu erschaffen, zu verschieben, virtuelle Bereiche zu markieren oder Ähnliches. Auch kann er angezeigte Formen auswählen und virtuell auf dem Körper platzieren.

Alternativ ist aber selbstverständlich auch eine Steuerung ohne Bewegungs- oder Gestenerkennung möglich, beispielsweise mit Hilfe eines Eingabegerätes, wie einer Maus oder Ähnlichem oder auch eine Sprachsteuerung.

Insbesondere im Falle einer Datenbrille können selbstverständlich auch Kopfgesten (vorzugsweise mit nicht-optischen Sensoren) erfasst werden und zur Steuerung genutzt werden.

An dieser Stelle sei angemerkt, dass die Einheit, welcher das Display zugeordnet ist oder welche das Display aufweist, typischerweise auch eine Recheneinheit aufweist oder jedenfalls mit einer Recheneinheit, kabellos oder kabelgebunden, verbunden ist. Typischerweise sind auch die Steuerung der Schneideinheit oder weitere Steuerelemente, welche zur Unterstützung oder Durchführung des Schneidprozesses genutzt werden, in irgendeiner Form mit besagter Recheneinheit verbunden. Es kann insbesondere auch eine Gerätesteuerung bestehen, welche sämtliche Bestandteile des Systems ansteuern oder regeln kann, in Beziehung untereinander. Besonders vorteilhafterweise ist eine solche Steuerung in eine Datenbrille eingebunden.

Gemäß einer besonders vorteilhaften Ausgestaltung des erfindungsgemäßen Verfahrens ist vorgesehen, dass die angezeigten Informationen das reale Bild überlagern, es also einfach überblenden oder aber sogar in dieses (dreidimensional) eingebunden werden.

In diesem Sinne entspricht das reale Bild entweder dem vom Nutzer optisch wahrgenommenen realen Bild, insbesondere des Körpers und seiner Umgebung, und die Informationen werden in sein Sichtfeld eingeblendet (wie beispielsweise bei einem sogenannten Head-up-Display).

Alternativ können die Informationen aber auch ein aufgenommenes Bild der Wirklichkeit überlagern, beispielsweise für den Fall, dass der Nutzer auf dem Display lediglich ein (aufgenommenes) Bild der Wirklichkeit sieht, so beispielsweise für den Fall, dass er ein Tablet oder ein anderes ähnliches Display umgehängt hat, welches mit einer Kamera versehen ist oder für den Fall, dass er eine Datenbrille aufgesetzt hat, welche gar nicht oder nur zu geringen Teilen transparent ist, sondern dem Nutzer auf der Innenseite der Brille ein Abbild des realen Bildes zeigt (welches beispielsweise durch eine Kamera der Brille oder Ähnliches aufgenommen ist).

In beiden Fällen können die Informationen jedenfalls das reale (Ab-) Bild überlagern. Dies geschieht insbesondere passgenau. Passgenau bedeutet in diesem Sinne, dass die Informationen ortsgebunden nachgeführt werden, beispielsweise bei einer Bewegung des Displays. Dies geschieht in einem sogenannten "augmented reality"-Vorgang, bei welchem das reale Bild von den Informationen beispielsweise flächenhaft überlagert wird. Diese Flächen oder Konturlinien werden dann bei einer Bewegung des Displays nachberechnet und auf dem Display nachgeführt, so dass für den Nutzer der Eindruck entsteht, diese Informationen befänden sich wirklich real in seinem Sichtfeld bzw. real auf dem Körper oder in dessen Umgebung. Mit anderen Worten wird vorteilhafterweise für die Durchführung des erfindungsgemäßen Verfahrens ein "augmented-reality-device", beispielsweise eine entsprechende Datenbrille, eingesetzt.

Alternativ kann aber selbstverständlich auch vorgesehen sein, dass eine einfachere Datenbrille eingesetzt wird, welche Informationen ohne Bewegungsanpassung in das Sichtfeld des Nutzers einblendet, wie bei einem Head-up-Display.

Gemäß einer weiteren vorteilhaften Ausgestaltung der Erfindung kann die Einheit, welche das Display bereitstellt, in einer Mehrzahl von unterschiedlichen Arbeitsmodi betrieben werden. Je nach durchzuführendem Arbeitsschritt (also einem unterstützenden Schritt oder durchführenden Schritt des Schneidprozesses) kann die Einheit in einem unterschiedlichen Arbeitsmodus betrieben werden. Dieser Arbeitsmodus kann entweder vom Nutzer ausgewählt sein oder die Einheit kann automatisch zwischen den Arbeitsmodi umschalten, beispielsweise wenn sie den Arbeitsschritt oder dessen Ende selbstständig erkennt (insbesondere mit Hilfe von optischen Erkennungs- oder Erfassungsmitteln).

Alternativ kann der Nutzer der Einheit ein Zeichen geben, dass ein Arbeitsschritt abgeschlossen ist, und diese kann dann automatisch in den nächsten Arbeitsmodus umschalten.

Vorzugsweise handelt es sich bei der Einheit um eine Datenbrille, welche somit für unterschiedliche Arbeitsschritte nutzbar ist. Die Arbeitsmodi können hintereinander automatisch ablaufen oder separat angewählt werden. Die Arbeitsmodi können selbstverständlich auch jederzeit vom Nutzer neu startbar sein, beispielsweise wenn sich ein Arbeitsschritt für einen neuen Körper wiederholen soll oder Ähnliches.

Die Besonderheit besteht also darin, eine Einheit (insbesondere nach Art einer Datenbrille) bereitzustellen, welche in verschiedenen Arbeitsmodi betreibbar ist oder verschiedene Arbeitsmodi enthält. Das System kann somit verschiedene Arbeitsmodi unterstützen oder verschiedene Arbeitsmodi enthalten. Zum Umstellen der Arbeitsmodi können beispielsweise auch verschiedene Gesten des Nutzers detektiert werden oder eine Spracherkennung oder ein separates Eingabegerät oder Ähnliches genutzt werden.

Bei den erfindungsgemäßen Informationen kann es sich um eine Vielzahl von Informationen handeln, wie beispielsweise Zahlen, Schriften, Buchstaben, Texte oder Ähnliches. Auch farbliche Informationen oder Leuchtinformationen, wie beispielsweise ein Highlighten oder Aufblinken einer bestimmten Stelle oder einer bestimmten Information, gehört zu dieser Art der Information.

Gemäß einer besonders vorteilhaften Ausgestaltung der Erfindung umfasst die Information aber mindestens eine Konturlinie oder -fläche, also mindestens einen (auch ausgefüllten) Umriss. Diese Konturlinie kann von dem Nutzer erstellt werden oder kann von dem Nutzer selber platzierbar, verstellbar und/oder anpassbar sein.

Ein typischer Fall einer derartigen Konturlinie ist eine Konturlinie, die von einem Nutzer erzeugt wird, um einen Fehler zu markieren. Beispielsweise kann der Nutzer auf dem Display virtuell einen Fehler umkreisen oder Ähnliches (beispielsweise mit einer Gestenkontrolle oder einem Eingabegerät). Auch kann eine derartige vom Nutzer erzeugte Konturlinie oder vorgebene Konturlinie später in einem Nesting-Verfahren verschoben werden. Auch die Außenkontur des Körpers kann durch eine derartige Konturlinie dargestellt werden. Die Konturlinie kann auch von der Einheit, beispielsweise mit Hilfe optischer Erfassungsmittel, selber erkannt werden, wie beispielsweise der Umriss des Körpers. Dieser kann dann bei dem Ausrichten des Körpers auf dem Schneidetisch an eine virtuelle Konturlinie angepasst werden oder umgekehrt.

Gemäß einer besonders vorteilhaften Ausgestaltung der Erfindung weisen die angezeigten Informationen Fehlerstellenmarkierungen auf. Wie oben bereits erklärt, kann es sich hierbei um Konturlinien handeln, welche die Fehlerstellen (abschließend) umschließen. In diese Fehlerstellenbereiche darf später in einigen Fällen keine Form platziert werden, welche aus dem Körper herauszuschneiden ist. In anderen Fällen darf in diese Fehlerstellenbereiche später zwar eine Form plaziert werden, wobei aber der Qualitätslevel der Fehlerstelle zu berücksichtigen ist: So können in bestimmte Fehlerstellenbereiche Formen plaziert werden, welche beim späteren Endprodukt beispielsweise nicht sonderlich gut einsehbar sind (beispielsweise an der Rückseite von Möbeln oder Ähnlichem). Insgesamt kann hierdurch also der Qualitätslevel der Fehlerstelle berücksichtigt werden.

Bei derartigen Fehlerstellen kann es sich beispielsweise um Falten, Narben, Mückenstiche, Wellen, Rauheiten oder Ähnliches handeln (beispielsweise auf einem Leder oder einer Tierhaut) oder einen Fehldruck (beispielsweise bei einem Rapportstoff) oder einen sonstigen Materialfehler.

Entsprechende Konturlinien können vom Benutzer selber erstellt werden oder es können vom Nutzer auf dem Display vorgegebene Konturlinien eingeblendet werden, die angepasst werden können. Jedenfalls können diese Konturlinien vom Nutzer auch verschoben werden oder sonstwie anpassbar sein. Die Konturlinien können auch den Außenbereich einer Fläche darstellen: So kann ein Fehler beispielsweise mit Hilfe einer Fläche markiert werden, welche farbig dargestellt ist oder einen anderen Helligkeitsgrad aufweist.

Alternativ oder zusätzlich können die Informationen auch in Form von Fehlerstellen qualifizierenden Angaben vorliegen. Diese qualifizierenden Angaben können beispielsweise die Intensität der Schädigung oder einfach die Art der Fehlerstelle beschreiben.

Die Informationen können in die Fehlerstelle selber eingeblendet werden, beispielsweise mit Hilfe von Text, Buchstaben oder Zahlen oder sie können auch am Rand des Sichtfelds eingeblendet werden oder sonstwie berücksichtigt werden.

Der Benutzer kann die Fehlerstellen in dem erfindungsgemäßen Verfahren auch selber qualifizieren, beispielsweise mit Hilfe einer Gestenerkennung. So kann er je nach Art der Fehlerstelle beispielsweise einen oder mehrere Finger vor die Umgebung der Fehlerstelle halten, so dass die dem Display zugeordnete Einheit mit optischen Erfassungsmitteln erkennen kann, um welche Art von Fehlerstelle es sich handelt. Diese Information kann dann abgespeichert und/oder gegebenenfalls angezeigt werden.

Gemäß einem weiteren Vorteil des erfindungsgemäßen Verfahrens können die angezeigten Informationen Nestinghinweise aufweisen. Bei einem sogenannten Nestingprozess handelt es sich um einen Prozess, bei welchem Schnittformen oder Ausschnittformen auf einem Körper virtuell platziert werden, um einerseits zu gewährleisten, dass die späteren aus dem Körper ausgeschnittenen Zuschnittteile, welche ihrer Form nach der Ausschnittform entsprechen, nicht im Bereich vorher markierter Fehlerstellen liegen.

Zusätzlich oder alternativ wird ein Nestingvorgang aber auch verwendet, um die Ausschnittformen derart auf dem Körper zu platzieren, dass eine bestmögliche Ausnutzung des Körpers derart erreicht wird, dass nach Abschluss des Schnittprozesses möglichst wenig Restmaterial oder Ausschuss übrig verbleibt. Ein derartiger Nestingvorgang kann von einem System automatisch durchgeführt werden. In diesem Fall kann beispielsweise das Ergebnis dem Benutzer auf dem Display angezeigt werden und er kann manuelle Änderungen vornehmen.

Alternativ kann ein derartiger Nestinghinweis aber auch manuell oder teilmanuell durchgeführt werden. So kann der Nutzer die virtuellen Ausschnittformen manuell auf dem Körper platzieren. Er sieht dies auf dem Display und kann bei der Positionierung die Fehlerstellen berücksichtigen, welche er gegebenenfalls in einem vorigen Arbeitsschritt markiert hat. Diese Markierungen können auf dem Display ebenfalls optional angezeigt werden. Ein Nutzer kann einen derartigen Nestingvorgang auch manuell anfangen und dann automatisch vollenden lassen (und dann später wieder noch teilweise rückgängig machen oder anpassen oder Ähnliches). Insbesondere können Nutzern auf dem Display auch Informationen über den erwünschten Ausnutzungsgrad bzw. über den aktuell erreichten Ausnutzungsgrad und/oder über den voraussichtlich bei einer weiteren entsprechenden Platzierung zu erreichenden Ausnutzungsgrad angezeigt werden.

Die Ausschnittformen können vorteilhafterweise in Form von Konturlinien vorliegen, die der Nutzer verstellen, bewegen oder verschieben kann. Vorzugsweise wird dem Nutzer auf dem Display auch eine Auswahl an Ausschnittformen bereitgestellt, die er anwählen und dann virtuell auf die Haut bzw. den Körper verschieben kann.

Hierbei zeigt sich ein Einsatz einer "augmented reality"-Anwendung als besonders geeignet, da der Nutzer das Display bewegen kann, wobei die angezeigten virtuellen Ausschnittformen derart nachberechnet werden, dass sie fiktiv an der vor der Bewegung des Displays durchgeführten Stelle verbleiben, wie dies aus der "augmented reality" bekannt ist.

Gemäß einer weiteren, besonders vorteilhaften Ausgestaltung der Erfindung weisen die Informationen Ausrichtungshinweise zur manuellen Ausrichtung des zu schneidenden Körpers auf. Typischerweise wird der Körper in einem ersten Arbeitsschritt hinsichtlich seiner Außenkontur gescannt, beispielsweise mit der Hilfe einer Kamera, welche weiter insbesondere sogar der dem Display zugeordneten Einheit zugeordnet sein kann. In der Praxis sind aber derzeit noch separate bzw. stationäre (Digital-) Kameras üblich.

Insbesondere kann dem Körper ein Barcode zugeordnet werden nachdem seine Außenkontur erfasst wurde. Auf einem Schneidetisch kann der Barcode dann eingelesen werden und das System weiss dann sofort, wie die Außenkontur des Körpers aussieht und wie dieser zu liegen hat.

Auf dem Display kann die Sollposition der Außenkontur der Haut angezeigt werden und der Benutzer kann die aufgelegte Haut in die Sollposition bringen. Hierbei unterstützt die "augmented reality" dann ein In-Übereinstimmung-Bringen von tatsächlicher Position des Körpers und gewünschter Position des Körpers.

Grundsätzlich ist aber selbstverständlich auch ein genau umgekehrtes Vorgehen möglich: So kann die virtuelle Schneidposition an die tatsächliche Position des Körpers angepasst werden, so dass dem System auf diese Weise mitgeteilt werden kann, wie der Körper tatsächlich liegt. Das System oder eine Recheneinheit oder die Steuerung kann diese Information dann bei einem Schneidvorgang berücksichtigen und das Schneidbild entsprechend anpassen bzw. drehen oder verschieben.

Gemäß einem weiteren vorteilhaften Aspekt des erfindungsgemäßen Verfahrens weisen die Informationen Entnahmehinweise zur manuellen Entnahme von Zuschnittteilen aus dem geschnittenen Körper auf. Ist ein entsprechender Schneidprozess erfolgreich beendet worden, so werden die entsprechenden ausgeschnittenen Zuschnittteile typischerweise manuell entnommen. Das erfindungsgemäße Verfahren unterstützt hierbei eine zügigere Entnahme, indem es einem Nutzer beispielsweise eine Entnahmereihenfolge anzeigt. So können dem Nutzer virtuell, beispielsweise bei einem Head-UP-Display, Informationen über die Art Zuschnittteil (beispielsweise die Form) angezeigt werden, welches zuerst zu entnehmen ist.

In einem "augmented reality"-Anwendungsfall können den einzelnen Zuschnittteilen beispielsweise Reihenfolgeinformationen zugeordnet oder eingeblendet werden: So ist es durchaus vorstellbar, dass auf die Zuschnittteile auf dem Display in einer "augmented reality"-Funktion Nummern oder Buchstaben einer Bearbeitungsreihenfolge oder Ähnliches eingeblendet werden. Der Nutzer weiss dann genau, welches Zuschnittteil zuerst entnehmbar ist. Insbesondere kann das System auch erkennen, ob ein Teil entnommen worden ist und die Reihenfolge oder Information anpassen oder Ähnliches.

Gemäß einem weiteren, sehr vorteilhaften Aspekt können die angezeigten Informationen auch Ablagehinweise für geschnittene oder entnommene Zuschnittteile aufweisen. Typischerweise werden entsprechende Zuschnittteile in entsprechende Ablagefächer oder auf Ablageflächen abgelegt. Dem Nutzer können Informationen angezeigt werden, beispielsweise mit Hilfe von Nummern oder mit Hilfe einer "augmented reality"-Kennzeichnung, in welches Fach oder auf welche Ablagefläche oder in welche Ablageposition ein soeben entnommenes Zuschnittteil gehört.

Beispielsweise kann einem Nutzer die Nummer eines Ablageregals oder die Nummer eines Ablagefachs angezeigt werden oder in einer augmented-reality-Anwendung kann ein entsprechendes Fach farbig oder mit Hilfe von Zeichen oder Helligkeit oder einer Konturlinie markiert werden.

Die das Display bereitstellende Einheit kann auch Mittel zur Beleuchtung oder Ausleuchtung des Körpers aufweisen.

Gemäß einem weiteren Aspekt betrifft die vorliegende Erfindung ein System nach Patentanspruch 12, welches im Wesentlichen die Ausführung eines der beschriebenen Verfahren ermöglicht. In diesem Sinne kann ein System mindestens eine Auflagefläche für den Körper aufweisen. Typischerweise sind mehrere Auflageflächen des Systems vorgesehen, beispielsweise eine für das Einscannen der Kontur des Körpers und eine zum Schneiden des Körpers oder Ähnliches. Auch kann eine oder mehrere der Auflageflächen verfahrbar sein, beispielsweise linear oder nach Art von umlaufenden Bändern.

Vorzugsweise weist das System auch eine Schneideinheit auf, wie eine Wasserstrahlschneideeinrichtung oder eine mechanische Schneideinrichtung, welche das Schneiden überhaupt erst ermöglicht oder eine Beaufschlagungseinheit für Stanzeisen. Das System weist ferner ein an einem Nutzer in dessen Sichtfeld anordenbares Display auf. Dieses kann auch Bestandteil einer Einheit sein, beispielsweise nach Art einer Datenbrille oder auch eines Tablets. Vorgesehen ist, dass eine Befestigung oder Befestigungsmittel vorgesehen sind, beispielsweise nach Art eines Brillengestells, Bügels oder Ähnlichem. Bei der Einheit kann es sich insbesondere um eine ("augmented reality"-) Datenbrille handeln.

Sämtliche beschriebenen Vorteile und Ausführungen, welche im Bezug auf das erfindungsgemäße Verfahren beschrieben wurden, sollen, sofern übertragbar, auch für das erfindungsgemäße System gelten.

In diesem Sinne kann das erfindungsgemäße System beispielsweise (vorzugsweise optische) Erfassungsmittel, wie Kamera oder optische Sensoren, aufweisen (insbesondere an der Einheit oder weiter insbesondere an der Datenbrille). Auch kann ein "augmented-realitydevice", wie eine entsprechende Datenbrille, Teil des Systems sein. Ferner auch eine Steuerung. Insbesondere können auch separate Eingabeelemente, wie Maus, Tastatur, Touchscreen oder Ähnliches Teil eines entsprechenden Systems sein. Auch kann eine Nestingsteuerung Teil des Systems sein oder eine Absortiereinrichtung oder ein entsprechendes Lager, wie entsprechende Fächer oder Regale.

Weitere Vorteile der vorliegenden Erfindung ergeben sich anhand gegebenenfalls nicht zitierter Unteransprüche sowie anhand der nachfolgenden Figurenbeschreibung.

Darin Zeigen:

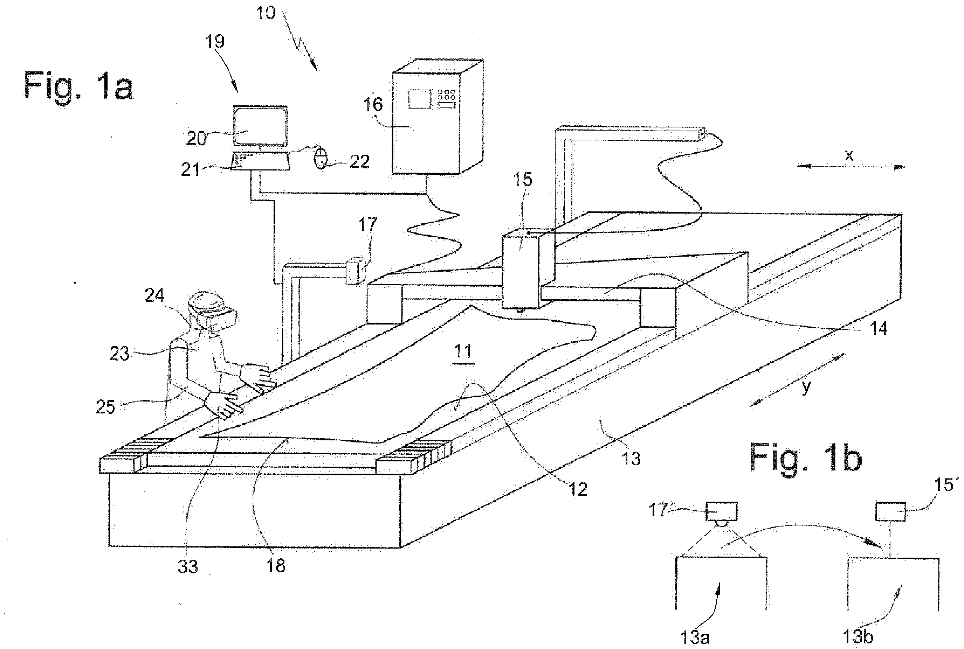

- Fig. 1a: in einer sehr schematischen, perspektivischen Schrägaufsicht ein erfindungsgemäßes System mit einer Gestensteuerung durch einen Nutzer, der eine Display-tragende Einheit als Datenbrille am Kopf trägt und einem kombinierten Scann- sowie Schneidtisch für eine dargestellte Tierhaut,
- Fig. 1b: eine seitliche, sehr schematische Darstellung eines alternativen Ausführungsbeispiels mit separierten Scann- und Schneidetischen,

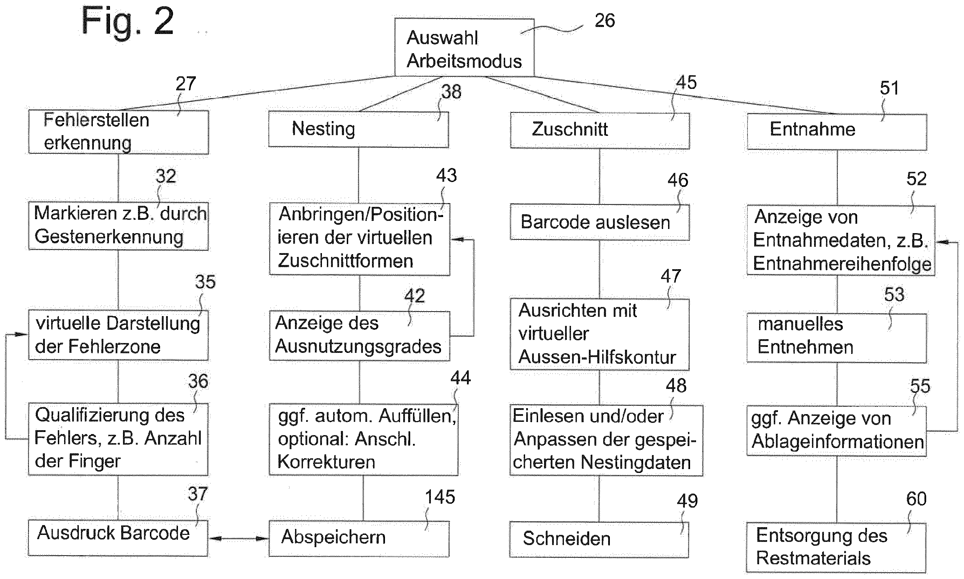

- Fig. 2: ein ebenfalls sehr schematisches Abfolgediagramm der verschiedenen Arbeitsmodi einer erfindungsgemäßen, ein Display bereitstellenden, Einheit,

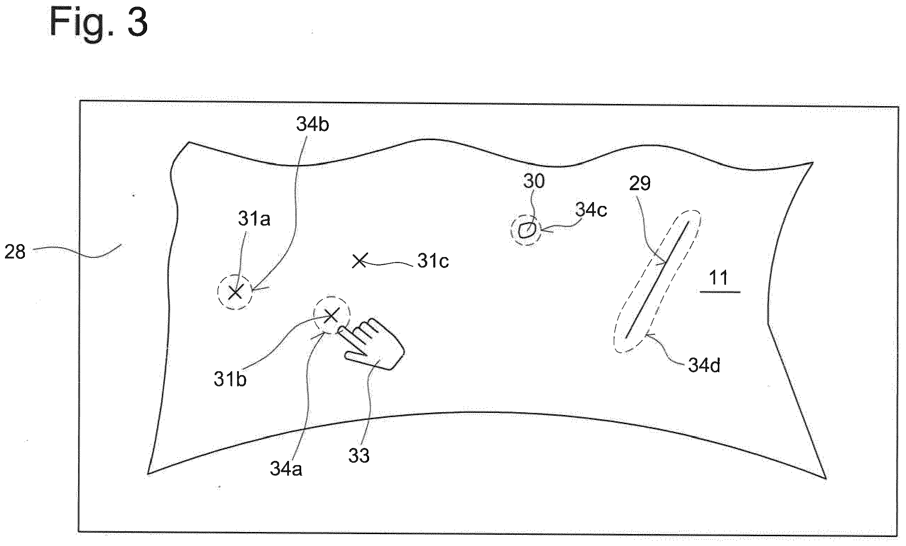

- Fig. 3: eine sehr schematische Displayansicht mit dem realen Bild der Tierhaut gemäß Fig. 1, mit virtuell markierten Fehlerstellenkonturlinien sowie der schematisch dargestellten Hand des Nutzers,

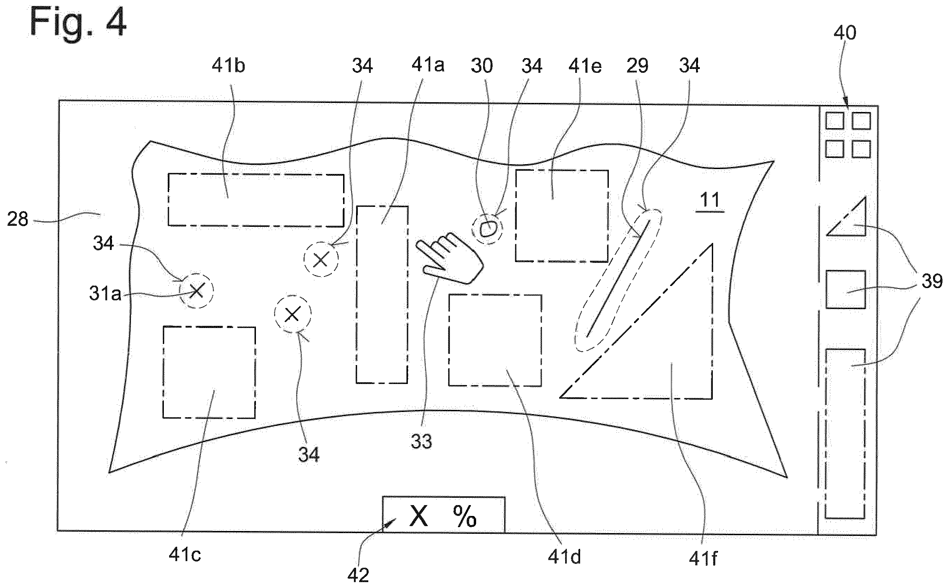

- Fig. 4: in einer Ansicht gemäß Fig. 2 die Displayansicht der Haut gemäß Fig. 2 in einem anderen Arbeitsmodus, nämlich einem Nesting-Modus unter Anzeige des aktuellen Ausnutzungsgrades und einem im rechten Displaybereich dargestellten Auswahlmenü für Zuschnittformen, welche teilweise bereits virtuell auf der Haut platziert sind,

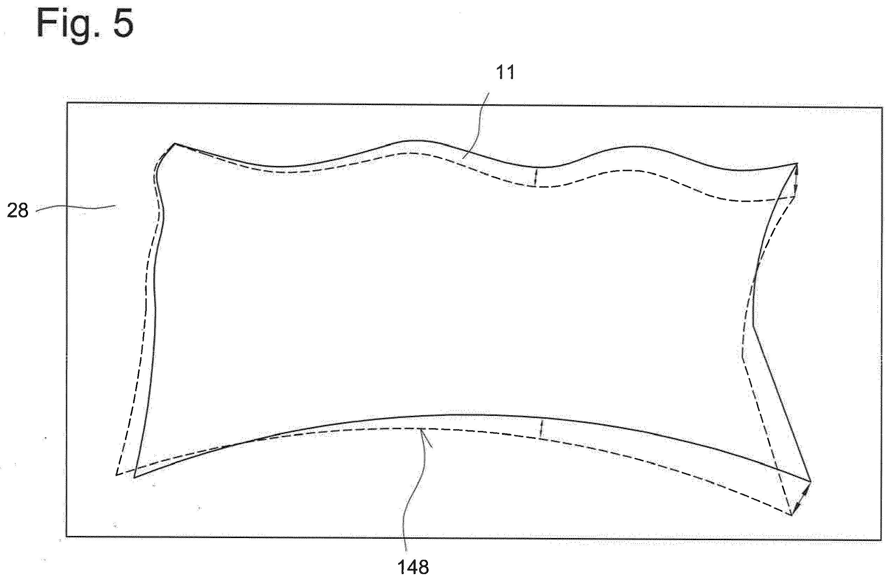

- Fig. 5: in einer Ansicht gemäß Fig. 2 und 3 die Tierhaut in einem weiteren Arbeitsmodus, bei welchem ein vorher aufgenommener oder digitalisierter Umriss der Tierhaut virtuell dargestellt ist, wobei der Nutzer den tatsächlich dargestellten Umriss der Tierhaut und besagten virtuellen Umriss in Überdeckung bringen muss,

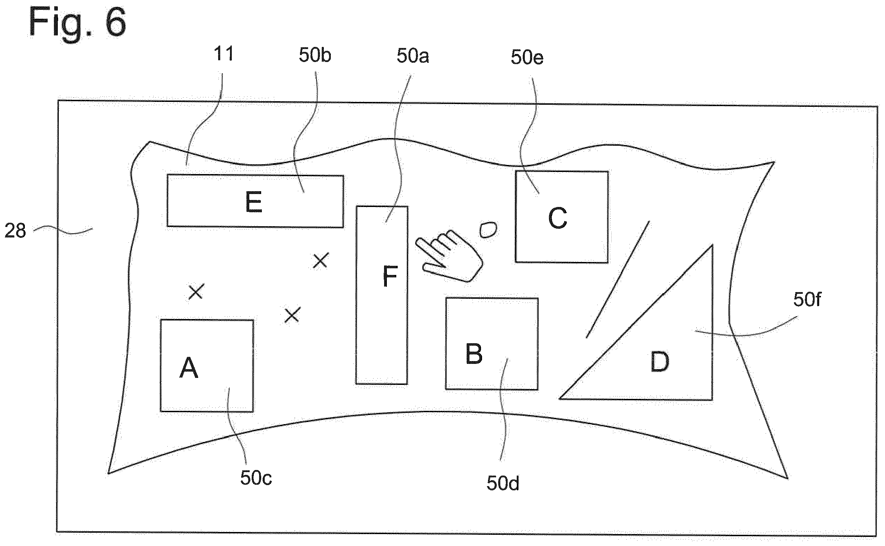

- Fig. 6: in einer Darstellung gemäß Fig. 2 bis 4 ein weiterer erfindungsgemäßer Arbeitsschritt nach Durchführung eines Schneidprozesses, welcher das Entnehmen der bereits geschnittenen Zuschnittteile betrifft, welche virtuell hinsichtlich ihrer Entnahmereihenfolge markiert sind, insbesondere mit Buchstaben, und

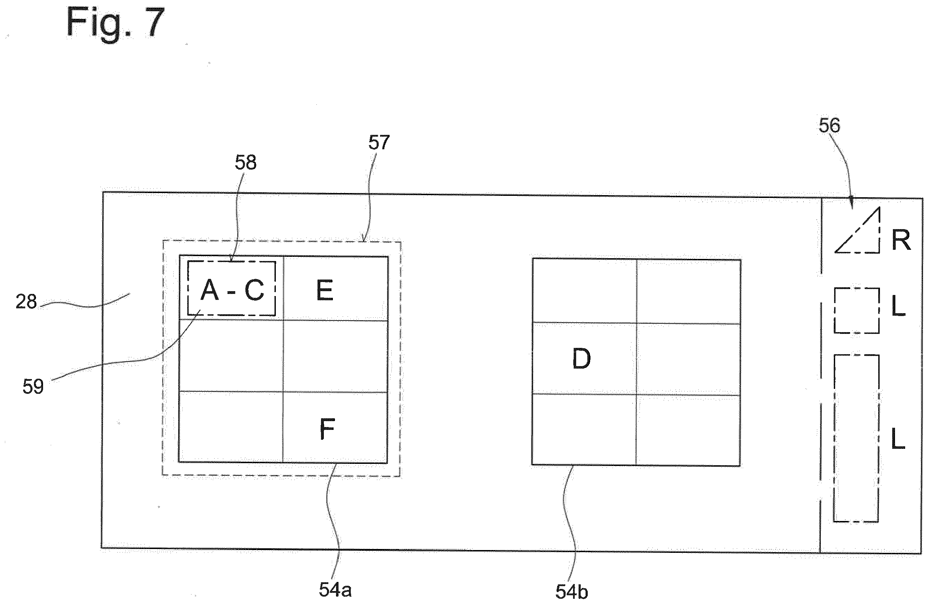

- Fig. 7: eine sehr schematische Seitenansicht eines Ablegesystems für die in Fig. 5 dargestellten, zu entnehmenden Zuschnittteile, wobei die linke Ablage virtuell gehighlightet ist und den in Fig. 5 dargestellten, mit Buchstaben versehenen Zuschnittteilen in Fig. 6 einzelne Fächer durch eine virtuelle Buchstabenmarkierung zugeordnet sind.

Der folgenden Figurenbeschreibung sei vorangestellt, dass gleiche oder vergleichbare Teile mit identischen Bezugszeichen versehen sein können, teilweise unter der Hinzufügung kleiner Buchstaben oder von Apostrophs, wobei diese in den der Figurenbeschreibung nachfolgenden Patentansprüchen der Übersichtlichkeit halber gegebenenfalls fortgelassen sind.

Fig. 1a zeigt zunächst ein erfindungsgemäßes System 10 zur Durchführung eines erfindungsgemäßen Verfahrens. Das gezeigte System 10 dient insbesondere der Vorbereitung oder Durchführung eines Schneidprozesses eines flächigen Körpers 11, welcher in der dargestellten Fassung einer Tierhaut bzw. einem Leder entspricht.

Das Leder 11 befindet sich auf einer Auflagefläche 12 eines kombinierten Digitalisier- und Schneidetisches 13. Der Tisch 13 dient dabei dem Schneiden des Körpers 11 mit Hilfe eines herkömmlichen Schneidportals 14. Dieses Schneidportal 14 kann insbesondere eine Schneideinheit 15, beispielsweise nach Art eines Wasserstrahlschneiders oder mit einem mechanischen Schneider nach Art eines Messers oder Ähnlichem, aufweisen. Die Schneideinheit 15 ist hierbei typischerweise mit Hilfe des Portals 14 sowohl in Längs- oder Förderrichtung y als auch in Querrichtung x bewegbar oder steuerbar, insbesondere von einer in Fig. 1 exemplarisch dargestellten Steuerung 16. Die dargestellte Steuerung 16 ist in Fig. 1a über Kabel sowohl mit dem Schneidportal 14 als auch mit einer Scaneinheit 17, beispielsweise nach Art einer Kamera, insbesondere einer Zeilen- oder CCD-Kamera, verbunden. Die Verbindungen können selbstverständlich aber auch kabellos ausgeführt sein.

Die Scaneinheit 17 dient in einem ersten Arbeitsschritt typischerweise dem Scannen der Außenkontur 18 des Körpers 11. Dies ist insbesondere für den Fall wichtig, dass der Körper 11 vor einem Schneidprozess wieder von der Auflagefläche 12 entfernt wird. In dem in Fig. 1a dargestellten Ausführungsbeispiel sind die Steuerung 16 sowie die Kamera 17 mit einer Recheneinheit 19 verbunden, beispielsweise nach Art eines herkömmlichen PCs. Diesem ist sowohl ein Monitor 20 als auch eine Tastatur 21 sowie ein Eingabegerät 22 nach Art einer Maus zugeordnet. Die Recheneinheit 19 kann dabei selbstverständlich auch teilweise oder vollständig in die Steuerung 16 integriert sein.

An dieser Stelle sei zu der Auflagefläche 12 ausgeführt, dass diese selbstverständlich bewegbar angeordnet sein kann, beispielsweise als Teil oder auf einem umlaufenden Förderband, welches eine Verfahrbarkeit des aufgelegten Körpers 11 in Längs- oder Förderrichtung y ermöglicht.

Schließlich zeigt Fig. 1a einen Nutzer 23, welcher eine ein Display tragende Einheit 24, insbesondere nach Art einer Datenbrille, trägt. In dem Ausführungsbeispiel steht der Nutzer an dem Tisch 13 und führt mit Gesten (durch seinen Arm 25 bzw. die Hand 33 oder die Finger des Arms 25) eine Gestensteuerung des erfindungsgemäßen Verfahrens aus.

Die vorliegende Figurenbeschreibung bezieht sich überwiegend auf eine als Datenbrille ausgeführte Einheit 24. Grundsätzlich ist es aber auch vorstellbar, dass an dem Nutzer 23 auf andere Art ein Display angeordnet ist, beispielsweise durch ein Umhängen eines nicht dargestellten Tablets oder Ähnlichem. Offensichtlich befindet sich jedenfalls ein Teil der Einheit, insbesondere ein Display, im Blickfeld des Nutzers 23.

Fig. 1b verdeutlicht dann, dass die Zusammenfassung von Digitalisier- bzw. Aufnahmeeigenschaften und Schneideigenschaften des Tisches 13 gemäß Fig. 1a nicht zwingend ist: Vielmehr ist es in der Praxis oft so, dass gemäß Fig. 1b tatsächlich ein separater Digitalisiertisch 13a und ein separater Schneidtisch 13b vorgesehen sind, wobei dem Schneidtisch 13a typischerweise die Scaneinheit 17' beispielsweise nach Art einer Kamera zugeordnet ist und dem Schneidtisch die Schneideinheit 15', welche in dem Ausführungsbeispiel als Wasserstrahlschneideinrichtung ausgeführt ist, aber selbstverständlich auch als Messerschneideeinheit oder Stanzeneinheit ausgeführt sein kann. Der aufgelegte Körper kann insbesondere von dem Tisch 13a auf den Tisch 13b manuell verlagert werden, insbesondere unter Zwischenschaltung einer Ablage, so dass auch zeitliche Abstände zwischen der Umlagerung variierbar sind.

Insbesondere unter Bezugnahme auf Fig. 2, welche ein Ablaufdiagramm eines erfindungsgemäßen Verfahrens darstellt (oder deren mehrerer) soll nun der Einsatz des erfindungsgemäßen Systems 10 unter Durchführung eines erfindungsgemäßen Verfahrens zur Unterstützung und/oder Durchführung eines Schneidprozesses (hierunter fallen insbesondere auch Stanzprozesse) des Körpers 11 beschrieben werden, wobei dann auch auf die anderen Figuren Bezug genommen werden wird. Ausgehend von Fig. 2 kann der in Fig. 1 dargestellte Nutzer 23 nach Feld 26 zunächst einen Arbeitsmodus der Einheit 24, also der Datenbrille 24, auswählen. Der Nutzer 23 kann hierbei eine Vielzahl von Arbeitsmodi auswählen, welche insbesondere dem durchzuführenden Verfahren bzw. Verfahrensschritt entsprechen können bzw. sollen.

Zur Auswahl des Arbeitsmodus gemäß Feld 26 in Fig. 2 muss der Nutzer typischerweise eine Benutzeroberfläche der Einheit 24 bedienen. Hierzu kann der Nutzer 23, wie in Fig. 1 dargestellt, beispielsweise seinen Arm 25 bzw. die entsprechende Hand oder die Finger zu einer Gestenausführung nutzen, welche von in die Einheit 24 integrierten, optischen Erfassungsmitteln (beispielsweise nach Art einer Kamera in der Einheit 24) erfasst und erkannt werden. Beispielsweise kann der Nutzer 23 mit einer Wischbewegung oder Ähnlichem zwischen verschiedenen Arbeitsmodi hin- und herschalten. Entsprechende Menüs können dem Nutzer auf einem später noch erläuterten Display in oder an der Einheit 24 (in dem Ausführungsbeispiel also in seiner Datenbrille) angezeigt werden.

Selbstverständlich sind auch andere Möglichkeiten der Bedienung der Einheit 24 möglich, so beispielsweise eine Nutzung von Eingabemitteln, wie der Tastatur 21 oder Maus 22 gemäß Fig. 1. Alternativ oder zusätzlich kann auch eine Sprachsteuerung der Einheit 24 bzw. der Benutzeroberfläche der Einheit 24 vorgesehen sein.

Jedenfalls kann der Nutzer zwischen einer Vielzahl von Arbeitsmodi gemäß Feld 26 nach Fig. 2 wählen.

Ein erster Arbeitsmodus entspricht dabei gemäß Feld 27 in Fig. 2 einer Fehlerstellenerkennung: So ist es in der Praxis so, dass viele flächige oder blockförmige Körper, insbesondere Leder- oder Tierhäute oder auch technische oder auch nicht-technische Textilien, Fehlerstellen aufweisen, beispielsweise nach Art von Narben, Löchern oder Ähnlichem.

In diesem Sinne zeigt Fig. 3 die Ansicht des Nutzers 23 auf einem (insbesondere in die Datenbrille 24 integrierten) Display 28. Auf dem Display 28 bzw. durch das Display 28 hindurch sind zunächst reale Bilder, wie beispielsweise die in Fig. 1 schon dargestellte Haut 11 zu erkennen (welche in Fig. 3 ggf. glattgezogen wurde, was den Unterschied in der Form im Vergleich zu Fig. 1 in Fig. 3 erklärt).

Die Haut 11 weist in der Realität und somit auch in dem realen Bild, typischerweise eine Vielzahl von Fehlerstellen auf, so nämlich beispielsweise eine Narbe 29, ein Brandloch 30 oder Insektenstiche 31. Diese Fehlerstellen 29 bis 31 sind in der Realität, also wirklich, auf dem Körper 11 vorhanden und der Nutzer kann sie daher in der realen Darstellung auch erkennen.

An dieser Stelle sei angemerkt, dass das in Fig. 3 dargestellte reale Bild von Körper 11 und Fehlerstellen in diesem Sinne typischerweise nicht auf dem Display (künstlich bzw. elektronisch) dargestellt wird: Vielmehr kann der Nutzer diese realen Bilder mit Hilfe seiner Augen durch die jedenfalls teiltransparente Brille hindurch erkennen.

In einem alternativen, hier jedoch nicht dargestellten Ausführungsbeispiel können auch die realen Bildelemente, wie Körper 11 und Fehlerstellen, in das Innere einer Brille projiziert werden, so dass der Nutzer 23 in diesem Fall tatsächlich nicht den realen Körper sehen würde, sondern ein reales Abbild bzw. eine Aufnahme, welche technisch in sein Sichtfeld projiziert wird. Gleiches gilt beispielsweise auch für den Einsatz eines umgehängten Tablet-Computers oder Ähnlichem, bei welchem der Nutzer typischerweise auch nur auf mit einer Kamera aufgenommene Bilder oder Abschnitte des Körpers 11 blickt.

Jedenfalls sieht der Nutzer gemäß Fig. 3 in dem beschriebenen ersten Arbeitsmodus den realen Körper 11 und reale Fehlerstellen 29 bis 31. Er kann nun gemäß Feld 32 in Fig. 2 die Fehlerstellen manuell markieren: Hierfür kann er beispielsweise eine Gestensteuerung mit Hilfe seines Arms 25 oder seiner Finger oder einem Finger oder Ähnlichem durchführen, wie dies auch in Fig. 3 angedeutet ist, wo die tatsächliche physische Hand 33 des Nutzers 23 angedeutet ist. Diese Hand 33 führt mit einem Finger, beispielsweise dem Zeigefinger, eine kreisförmige Bewegung um die Fehlerstelle 31b herum aus. Hiermit markiert sie die Fehlerstelle 31b virtuell. Dies wird dadurch ermöglicht, dass die Einheit 24, in diesem Fall die Datenbrille, Erfassungsmittel für eine Kamera oder einen Bewegungssender oder Ähnliches aufweist, welcher die mit der Hand 33 durchgeführte Geste erkennen kann.

Die mit der Hand 33 durchgeführte Bewegung erzeugt hierbei eine Konturlinie 34 nach Art einer Fehlermarkierung. Die Konturlinie 34a markiert hierbei beispielsweise großflächig den Bereich des Insektenstiches 31b. Gleiches gilt für die anderen Konturlinien 34b, 34c, 34d, welche die anderen Fehlerstellen 29, 30 und 31a markieren. Der Vollständigkeit halber sei zum Verständnis darauf hingewiesen, dass der Nutzer gemäß Fig. 3 nahezu alle Fehler markiert hat. Ihm fehlt lediglich noch eine Markierung für den Insektenstich 31c.

Hat der Nutzer 23 die Fehlerstellenmarkierung abgeschlossen, so kann er seine selber durchgeführten Markierungen noch einmal auf dem Display 28 prüfen, wo die Konturlinien 34 ja lediglich virtuell angezeigt werden, und anschließend kann er seine Markierungen speichern mit Hilfe der bereits beschriebenen Benutzeroberfläche der Einheit 24.

In einem alternativen Ausführungsbeispiel kann das System aber auch (von dem Nutzer 23) beauftragt werden, eine automatische Fehlerstellenerkennung durchzuführen. Dies geschieht beispielsweise mit Hilfe der Kamera 17 und mit Hilfe aus dem Stand der Technik bekannter Fehlerstellenerkennungsmethoden oder alternativ mit Hilfe von Erfassungsmitteln in der Einheit 24, wie beispielsweise ebenfalls einer Kamera oder Ähnlichem, und/oder typischerweise mit Hilfe von Rechenmitteln, wie beispielsweise der Steuereinheit 16 oder der Recheneinheit 19. In diesem Falle kann dem Nutzer 23 das Ergebnis dieser automatischen Fehlerstellenerkennung auf dem Display 28 angezeigt werden. Im Idealfall sähe das Ergebnis ebenfalls aus wie in Fig. 3 dargestellt, wo die virtuellen Konturlinien 34a (welche in diesem Fall automatisch berechnet worden wären) dem Nutzer angezeigt werden (wobei dann natürlich auch bereits eine Konturlinie für den Insektenstich 31c vorgesehen wäre). In diesem letztgenannten Fall könnte der Nutzer die Fehlerstellenmarkierung bzw. die dargestellten Konturlinien 34 idealerweise dann noch manuell anpassen bzw. auf dem Display 28 überprüfen und bestätigen oder verwerfen oder Ähnliches.

Zu Fig. 3 sei zudem angemerkt, dass die auf dem Display 28 dargestellten, den Schneidprozess betreffenden Informationen im Wesentlichen aus den Konturlinien 34 bestehen. Weitere Informationen können auf dem Display 28 selbstverständlich auch angezeigt werden, sind in Fig. 3 der Einfachheit halber aber fortgelassen.

Wichtig ist bezüglich Fig. 3 anzumerken, dass die in Fig. 3 auf dem Display 28 angezeigten Informationen 34 mit der Realität bzw. den realen Bildern oder der realen Abbildung des Körpers 11 (sowie in diesem Fall der Fehlerstellen 29, 30, 31) zueinander in einer dreidimensionalen Beziehung stehen. Dies bedeutet, dass wenn der Nutzer 23 das Display 28 bzw. die Einheit 24 (in dem vorliegenden Fall seinen Kopf) bewegt, die Informationen 34 nachgeführt werden, so dass die in Fig. 3 gestrichelt dargestellten Informationen weiterhin in gleicher Ausrichtung relativ zu dem Realbild verbleiben. Mit anderen Worten würden die Konturlinien 34 selbst bei einer Verlagerung des Displays 28 (bzw. beispielsweise bei einer Kopfbewegung des Nutzers 23) weiterhin die Fehlerstellen 29 bis 31 konturartig umschließen.

Dies muss für andere Informationen, welche eher globaler Natur sind, nicht gelten. Wird auf dem Display 28 beispielsweise die Umgebungstemperatur oder Ähnliches angezeigt, so würde diese Information selbst bei einer Bewegung des Displays 28 wohl an der absolut gleichen Displaystelle verbleiben.

Der zuerst genannte Fall hinsichtlich der dreidimensional angepassten Informationen wird auch als "augmented reality" bezeichnet. Globale Informationen brauchen hingegen lediglich nach Art eines "Head-Up-Displays" oder Ähnlichem angezeigt werden, wobei diese keinen dreidimensionalen Bezug zur Realität bzw. zum realen Bild aufweisen.

Gemäß Fig. 2 werden dem Nutzer 23 auf dem Display 28 nach Feld 35 die virtuellen Darstellungen der Fehlerzonen nach Art von Konturlinien 34 angezeigt. Dies entspricht im Wesentlichen einer Quantifizierung der Fehlerstellen, deren räumlicher Umfang beschrieben wird.

Gemäß Feld 36 in Fig. 2 kann aber grundsätzlich auch eine Qualifizierung der Fehlerstellen erfolgen, indem der Nutzer 23 einer jeden Fehlerstelle beispielsweise Informationen über ihre Art zuordnen kann oder Informationen über den Grad des Fehlers. Beispielsweise kann der Nutzer 23 einer Fehlerstelle nach Art eines Insektenstiches mit Hilfe des Anzeigens eines einzelnen Fingers in seinem Sichtfeld die Qualität 1 zuordnen. Einer Narbe kann er beispielsweise durch das Anzeigen mit zwei Fingern im Bereich des Erfassungsmittels der Einheit 24 die Qualität 2 zuordnen, und einem Loch, wie dem Loch 30, durch das Anzeigen oder Hinhalten von drei Fingern die Qualität 3.

Der Nutzer kann also mit Hilfe der Einheit 24, insbesondere mit Hilfe der Datenbrille, eine Qualifizierung eines jeden Fehlers vornehmen, insbesondere direkt nach Kennzeichnung der Fehlerstelle, und dann zur nächsten Fehlerstelle übergehen oder Ähnliches.

Hat der Nutzer auf diese manuelle Weise oder durch rechnergesteuerte Unterstützung die Fehlerstellenerkennung abgeschlossen, so kann er an einer besonderen Ausgestaltung gemäß Feld 37 nach Fig. 2 beispielsweise die Informationen abspeichern und insbesondere einen Barcode oder Ähnliches erstellen, welchen er auf den Körper 11 aufkleben kann. Dies ist insbesondere für Fälle vorteilhaft, in denen der Körper nicht direkt geschnitten, sondern zunächst einmal (gegebenenfalls über einen längeren Zeitraum) gelagert wird.

Ausweislich Fig. 2, Feld 38 kann der Nutzer 23 auch einen anderen Arbeitsmodus wählen, nämlich einen Nestingmodus.

Vorzugsweise kann die Einheit 24 nach Abschluss einer Fehlerstellenerkennung direkt in den Nestingmodus überschalten. Alternativ kann der Nutzer 23, insbesondere wenn der Nestingvorgang zeitlich beabstandet von der Fehlerstellenerkennung erfolgt, aber selbstverständlich auch manuell diesen Arbeitsmodus 38 anwählen.

Ausgehend von dem zuletzt Beschriebenen kann der Nutzer in diesem Fall beispielsweise zunächst den Barcode des bereits einer Fehlerstellenerkennung unterzogenen Körpers 11 einlesen, so dass dem Nutzer auf dem Display 28 die in dem vorigen Arbeitsschritt markierten Fehlerstellenkonturen 34, wie in Fig. 4 dargestellt, angezeigt werden.

Fig. 4 entspricht dabei im Wesentlichen einer Ansicht gemäß Fig. 3, und diese Ansicht kann dem Nutzer direkt nachfolgend oder auch zeitlich versetzt angezeigt werden.

Zusätzlich zu dem realen Bild der Haut 11 sowie den realen Fehlerstellen 29, 30, 31 ist in Fig. 4, beispielsweise im rechten Bereich, auch ein Nesting-Menü dargestellt. Dieses wird dem Nutzer rein virtuell auf dem Display 28 angezeigt und zeigt insbesondere Symbole 39 für (Aus-) Schnittformen, welche es virtuell auf dem Körper 11 zu platzieren gilt, und welche die spätere Schnittsteuerung beeinflussen.

Auch zeigt das Menü gegebenenfalls weitere Informationsanzeigen oder Auswahlschaltflächen 40, welche der Vereinfachung der Benutzeroberflächenbedienung dienen oder globale Informationen anzeigen können, beispielsweise wie viele Schnittformen welcher Art noch zu platzieren sind oder Ähnliches.

Jedenfalls kann der Nutzer 23 die auszuschneidenden Schnittformen typischerweise manuell und virtuell auf dem Display 28 derart platzieren, dass diese Formen naturgemäß nicht im Bereich der Fehlerstellen 29, 30, 31 bzw. im Bereich deren virtuell angezeigter Konturlinien34 liegen. Hierzu kann der Nutzer 23 beispielsweise mit einer Gestenerkennung durch seine Hand 33 im rechten Menüfeld, also im rechten Bereich seines Blickfeldes, eines der Symbole 39 auswählen und eine entsprechende Zuschnittform virtuell auf dem Körper 11 platzieren. Diese virtuellen (Aus-)Schnittfomen 41 sind in Fig. 4 gestrichpunktet dargestellt. Die Schnittformen 41 entsprechen dabei den für einen weiteren Verarbeitungsprozess benötigten Formen, beispielsweise Formen, wie man sie in der Möbelindustrie für das Zusammennähen von Ledermöbeln oder Ähnlichem benötigt. In Fig. 4 sind exemplarisch drei vereinfachte Formen gewählt, lediglich der Übersichtlichkeit halber, nämlich eine dreieckige, eine quadratische und eine längliche Rechteckform. Der Nutzer platziert diese Formen 41, wie in Fig. 4 dargestellt, außerhalb der Konturlinien 34 der Fehlerstellen, so dass die tatsächlich später ausgeschnittenen Teile, (welche den Formen 41 entsprechen), dann keine inneren Fehlerstellen aufweisen.

Hierbei gilt es einen besonders guten Ausnutzungsgrad 42 der Haut zu erzielen. Dieser Ausnutzungsgrad 42 kann beispielsweise auf dem Display 28 global angezeigt werden. So ist in dem Beispiel eine globale Positionierung am unteren Displayrand zu erkennen. Diese Anzeige des Ausnutzungsgrades 42 kann dabei kontinuierlich an den sich durch die Platzierung der Formen ändernden Ausnutzungsgrad angepasst werden und somit "on-the-fly" aktualisiert werden. Es kann grundsätzlich, beispielsweise im Bereich 40, aber auch ein feststehender, zu erreichender Ausnutzungsgrad angezeigt werden.

Es ist dabei anzumerken, dass der in Fig. 4 rein exemplarisch mit X dargestellte Ausnutzungsgrad vermutlich nicht sehr hoch wäre. Dies ist der Übersichtlichkeit der vorliegenden Patentanmeldung geschuldet.

Während das Menü mit den Symbolen 39 und den Anzeigen 40 global ist und daher hinsichtlich seiner Position auf dem Display fest positioniert ist, handelt es sich bei den Schnittformen 41 gemäß Fig. 4 typischerweise um Informationen oder Daten, welche nachberechnet und in ihrer Anzeige nachgeführt werden und einen dreidimensionalen Bezug zur Realität bzw. zum realen Bild aufweisen (vergleichbar mit den Konturlinien 34).

An dieser Stelle sei angemerkt, dass die Figuren 3 bis 6 lediglich der Übersicht halber eine (lotrechte) Aufsicht zeigen.

Die Formen oder Schablonen 41 können dabei, wie beschrieben, manuell positioniert werden, wie dies auch in Feld 43 gemäß Fig. 2 beschrieben ist.

Alternativ kann auch ein automatischer Platzierungs- bzw. Nestingvorgang durchgeführt werden, welchen der Nutzer dann lediglich auf dem Display 28 kontrollieren muss, wobei ein solcher Vorgang wünschenswerterweise ein ähnliches Bild liefert, wie in Fig. 4 dargestellt, also ein ähnliches Bild, wie dies vom Nutzer auch erstellt worden wäre. In jedem Fall werden dem Nutzer 23 die Schnittformen 41 angezeigt, somit das Ergebnis eines automatischen Nestingvorganges. Der Nutzer kann die Schnittformen 41 dann gegebenenfalls noch nachkorrigieren oder völlig neu platzieren oder Ähnliches. Auch ist ein Mischvorgang vorstellbar, wobei der Nutzer 23 erste wichtige Schnittformen 41 manuell platziert und den Rest automatisch auffüllen lässt. In sämtlichen Fällen kann eine kontinuierliche Überprüfung und Anzeige des Ausnutzungsgrades 42 erfolgen.

Dieses automatische Auffüllen ist in Fig. 2 mit 44 gekennzeichnet. Schließlich kann bei Feld 145 gemäß Fig. 2 ein Abspeichern der Ergebnisse des Nestingsprozesses erfolgen.

Ein weiterer Arbeitsmodus betrifft gemäß Feld 45 nach Fig. 2 das eigentliche Zuschneiden des Körpers 11. Hierzu ist der Körper 11, insbesondere auf einen Schneidtisch (wie er in Fig. 1b mit 13b bezeichnet ist) aufzulegen. Da der Nesting-Vorgang typischerweise zeitlich beabstandet vom eigentlichen Schneidvorgang erfolgt, wurde der Körper 11 nach Durchführung des Nestingprozesses typischerweise entweder vom Tisch 13 genommen oder von einem anderen Tisch 13a in eine Ablage überführt. Für die Durchführung des Zuschnittprozesses wird die Haut 11 nunmehr auf eine Auflagefläche 12 eines Tisches 13 oder 13b zum Schneiden aufgelegt, und insbesondere kann ein vorher dort aufgetragener Barcode gemäß Feld 46 nach Fig. 2 eingelesen werden. Auf diese oder andere Weise kann das System 10 Informationen darüber erhalten, um welchen Körper 11 mit welchem Umriss 18 es sich handelt und insbesondere auch, wo dort Fehlerstellen aufzufinden sind (vorzugsweise sogar an welchen Stellen der Haut 11 die Schnitte zu platzieren sind).

Alternativ kann das Festlegen der Schnitte, also der Nesting-Vorgang, auch direkt vor dem Zuschneiden, nach dem Auflegen auf den Schneidtisch erfolgen.

Entscheidend ist beim Zuschneiden aber, dass der Körper 11 richtig ausgerichtet auf der Auflagefläche 12 aufliegt. Hierzu ist gemäß Feld 47 nach Fig. 2 ein Schritt vorgesehen, bei welchem der Nutzer 23 den Körper 11, insbesondere seine Außenkontur 18, in die für den Zuschnitt gewünschte Position überführt bzw. entsprechend ausrichtet. Hierzu kann der Nutzer 23 auf dem Display 28, wie es in Fig. 5 dargestellt ist, die in einem vorigen Arbeitsschritt eingelesene Außenkontur 18 des Körpers 11 als virtuelle Konturlinie 148 angezeigt bekommen. Die Konturlinie 148 zeigt somit die gewünschte Position des Körpers 11 für den Schneidevorgang. Auf diese gewünschte Position gemäß der Konturlinie 148 sind die in der Steuerung abgespeicherten Daten, wie Fehlerstellen oder auch Nestingergebnisse bezogen.

Der Nutzer 23 kann den Körper 11 somit in seinem Blickfeld, beispielsweise unter Nutzung der Datenbrille 24, in Abgleich oder Überdeckung mit der virtuellen Kontur 148 bringen.

Selbstverständlich ist auch das genau gegenteilige Verfahren möglich, bei welchem die virtuelle Kontur 148 an die tatsächliche Auflageposition des Körpers 11, wie er in Fig. 5 dargestellt ist, durch den Nutzer 23 angepasst wird. In diesem Sinne braucht der Nutzer 23 den tatsächlich physischen Körper 11 überhaupt nicht zu berühren, sondern kann rein virtuell die Solllinie 148 verschieben, so dass es auf dem Display 28 zu einer Überdeckung kommt. Er kann dem System 10 beispielsweise durch eine Geste oder Ähnliches mitteilen, dass die virtuelle und die tatsächliche Außenkontur in Überdeckung sind. Und in dem letztgenannten Fall kann das System 10 dann die tatsächliche Auflageposition oder -ausrichtung des Körpers 11 berücksichtigen und die entsprechenden Nesting- oder Fehlerstellendaten vor der Durchführung des Schneidprozesses entsprechend anpassen. Diese Daten können also bei der Durchführung des Schneidprozesses berücksichtigt werden.

Da grundsätzlich beide Möglichkeiten der Anpassung denkbar sind, zeigt Fig. 5 jeweils Verschiebepfeile in beide Richtungen.

Entscheidend ist jedenfalls, dass vor dem Zuschnitt noch die bereits gespeicherten Nestingdaten eingelesen werden (bei 48 in Fig. 2) und die Steuerung somit unter Kenntnis der tatsächlichen Auflagepositionen des Körpers 11 und der Nestingdaten einen Schneideprozess durchführen oder initieren kann, wie dies im Feld 49 erkennbar ist.

Nach der Durchführung eines Schneidprozesses kann sich einem Nutzer 123 dann ein Bild ergeben, wie es in Fig. 6 dargestellt ist: So erfolgte der Schneidprozess entlang der beispielsweise in Fig. 4 dargestellten Konturlinien der Schnittformen 41. Dies führt zu aus dem Körper 11 herausgeschnittenen Schnittformen 50, welche durch den Nutzer nunmehr entnehmbar sind. Um die Entnahme zu erleichtern, läuft die Einheit 24 gemäß Feld 51 in Fig. 2 in einem Arbeitsmodus, welcher sich mit der Entnahme der Zuschnitteile 50 beschäftigt und diese gegebenenfalls erleichtert.

So werden gemäß Feld 52, wie in Fig. 6 dargestellt, Entnahmeinformationen auf dem Display 28 angezeigt, welche beispielsweise die Entnahmereihenfolge der Zuschnittteile 50 vorgeben.

So weiß der Nutzer 23, dass er zunächst das virtuell mit dem Buchstaben A gekennzeichnete Zuschnittteil 50c entnehmen muss, anschließend das mit dem virtuellen Buchstaben B gekennzeichnete Zuschnitteil 50d usw.

Diese Reihenfolge kann ihm, wie in Fig. 6 dargestellt, beispielsweise durch Großbuchstaben oder Zahlen angezeigt werden, die virtuell in Überdeckung mit den eigentlichen realen Zuschnittteilen 50 gebracht werden. In dem Fall handelt es sich um "augmented reality"-Daten, da diese zu den eigentlichen Zuschnittteilen 50 dreidimensional in Bezug stehen.

In einem alternativen, nicht dargestellten Ausführungsbeispiel kann dem Nutzer aber auch lediglich nach Art eines Head-Up-Displays angezeigt werden, welche Formen er zunächst entnehmen muss, ohne dass hierfür eine "augmented reality"-Anwendung notwendig wäre. Jedenfalls kann auf diese Art und Weise das manuelle Entnehmen, was in Fig. 2 mit dem Bezugszeichen 53 gekennzeichnet ist, erheblich erleichtert werden.

Besonders vorteilhafterweise kann das System 10 zudem eingesetzt werden, wie in Fig. 7 dargestellt, wobei Fig. 7 abermals eine Displayansicht 28 zeigt, bei welcher der Nutzer 23 nunmehr aber auf zwei Ablageeinheiten 54a, b schaut. Diese Ablageeinheiten 54a, b sind beispielsweise nach Art von Regalen ausgeführt.

Im Sinne einer "augmented reality"-Anwendung können dem Nutzer 23 gemäß Feld 55 in Fig. 2 nun Ablageinformationen auf dem Display 28 angezeigt werden, beispielsweise Informationen darüber, in welches der beiden Ablageeinheiten 54a oder b der Nutzer 23 ein gerade aufgenommenes Zuschnittteil 50 abzulegen hat.

Hierbei können den beiden Regalen 54a und 54b beispielsweise große Buchstaben (wie "L" für links und "R" für rechts) zugeordnet werden. In einem in Fig. 7 rechts dargestellten Displaymenü nach globaler Art kann für jede Form angezeigt sein, in welches Regal eine Ablage zu erfolgen hat ("R" oder "L").

Zusätzlich oder alternativ kann das entsprechende Regal aber auch, wie in Fig. 7 dargestellt, virtuell markiert werden, beispielsweise mit einer Konturlinie 57 oder 58, welche beispielsweise eine der Ablageeinheiten 54 (im vorliegenden Fall die linke 54a) oder sogar ein Fach 59 einer Ablageeinheit 54, markieren kann. Diese virtuelle Markierung kann beispielsweise durch Konturlinien oder auch durch eine farbliche oder kontrastreiche oder blinkende Hervorhebung oder Ähnliches erfolgen. Typischerweise können diese letztgenannten Informationen nach Art einer "augmented reality" erfolgen, also unter dreidimensionaler Bezugnahme auf die Realität oder ein Realbild.

Ferner können, wie ebenfalls in Fig. 7 dargestellt, zusätzlich oder alternativ, einzelne Regale oder Ablagefächer virtuell mit Informationen über eine Ablagereihenfolge versehen werden. Beispielsweise können die aus Fig. 6 bekannten Großbuchstaben in einer derartigen Anwendung gemäß Fig. 7 aufgenommen werden. Auch ist es vorstellbar, einfach einzelne Regalfächer, wie das Regalfach 59, ohne Beachtung einer Reihenfolge virtuell zu markieren, um darauf hinzuweisen, in welche Fächer oder Regale die gerade abzulegenden Zuschnittteile 50 gehören.

All dies erleichtert die Durchführung eines Schneidprozesses erheblich. Abschließend kann nach Feld 60 in Fig. 2 der Ausschuss entfernt werden.

## Patentansprüche

1. Verfahren zur Unterstützung oder Durchführung eines Schneid- und/oder Stanzprozesses flächiger oder blockförmiger, vorzugsweise biegeschlaffer, Körper (11), insbesondere technischer- oder nichttechnischer Textilien oder Tierhäute, umfassend die Schritte
• Anordnen eines Displays (28) an einem Nutzer (33) in dessen Sichtfeld, insbesondere nach Art einer Datenbrille (24), und
• Anzeigen von den Schneidprozess des Körpers (11) betreffenden Informationen auf dem Display (28).

2. Verfahren nach Anspruch 1, **dadurch gekennzeichnet, dass** dem Display (28), vorzugsweise optische, Erfassungsmittel, wie Kamera oder optischer Sensor, zugeordnet sind, insbesondere mit welchen die Umgebung des Körpers (11), vorzugsweise dreidimensional, erfassbar ist.

3. Verfahren nach Anspruch 2, **dadurch gekennzeichnet, dass** die Erfassungsmittel eine Bewegungs- oder Gestenerkennung ermöglichen, insbesondere zur Ermöglichung einer Gestensteuerung.

4. Verfahren nach einem der voranstehenden Ansprüche, **dadurch gekennzeichnet, dass** die Informationen das reale Bild, insbesondere passgenau nach Art einer augmented reality, überlagern.

5. Verfahren nach einem der voranstehenden Ansprüche, **dadurch gekennzeichnet, dass** das Display (28) von einer, insbesondere handhabbaren, Einheit (24) bereitgestellt wird, vorzugsweise einer Datenbrille, welche, je nach durchzuführendem Arbeitsschritt, in einer Mehrzahl von unterschiedlichen, auswählbaren Arbeitsmodi (27, 38, 45, 51) betreibbar ist.

6. Verfahren nach einem der voranstehenden Ansprüche, **dadurch gekennzeichnet, dass** die angezeigten Informationen mindestens eine Konturlinie oder -fläche (34, 148) aufweisen, welche eine Fehlerstelle (29, 30, 31) oder (Aus-) Schnittform (39) oder die Außenkontur des Körpers (11) kennzeichnet.

7. Verfahren nach einem der voranstehenden Ansprüche, **dadurch gekennzeichnet, dass** die angezeigten Informationen Fehlerstellenmarkierungen aufweisen, insbesondere in Form von Fehlerstellen (29, 30, 31) auf dem Körper (11) markierenden, vorzugsweise verschiebbaren, Konturlinien (34), oder in Form von Fehlerstellen qualifizierenden Angaben, wobei weiter insbesondere letztere Konturlinien oder Angaben durch einen Nutzer (23) erzeugbar oder anpassbar sind.

8. Verfahren nach einem der voranstehenden Ansprüche, **dadurch gekennzeichnet, dass** die angezeigten Informationen Nestinghinweise aufweisen, insbesondere in Form des, insbesondere aktuellen, Nestingausnutzungsgrades (42), oder in Form von (Aus-)Schnittformen beschreibenden, vorzugsweise verschiebbaren, Konturlinien (39), wobei weiter insbesondere diese Konturlinien (39) durch einen Nutzer unter Berücksichtigung, vorzugsweise Anzeige, von Fehlerstellen (29, 30, 31) platzierbar sind.

9. Verfahren nach einem der voranstehenden Ansprüche, **dadurch gekennzeichnet, dass** die angezeigten Informationen Ausrichtungshinweise zur manuellen Ausrichtung des zu schneidenden Körpers (11), insbesondere auf einem Schneidtisch (13, 13b), aufweisen, insbesondere in Form einer die Sollposition des Körpers (11) beschreibenden, vorzugsweise verschiebbaren, Konturlinie (48), wobei weiter insbesondere diese Konturlinie (48) und die Außenkontur des Körpers (11) von einem Nutzer (23) zur Ausrichtung in Überdeckung bringbar sind.

10. Verfahren nach einem der voranstehenden Ansprüche, **dadurch gekennzeichnet, dass** die angezeigten Informationen Entnahmehinweise zur manuellen Entnahme von Zuschnittteilen (50) aus dem geschnittenen Körper (11) aufweisen, beispielsweise die Entnahmereihenfolge der Zuschnittteile (50) betreffend.

11. Verfahren nach einem der voranstehenden Ansprüche, **dadurch gekennzeichnet, dass** die angezeigten Informationen Ablagehinweise für geschnittene und entnommene Zuschnittteile (50) aufweisen, beispielsweise den Ablageort (54, 59) des Zuschnittteils (50) betreffend.

12. System (10) zur Unterstützung oder Durchführung eines Schneid- und/oder Stanzprozesses flächiger oder blockförmiger, vorzugsweise biegeschlaffer, Körper (11), insbesondere technischer Textilien oder Tierhäute, insbesondere zur Durchführung eines Verfahrens nach einem der voranstehenden Ansprüche, umfassend mindestens eine, vorzugsweise verfahrbare, Auflagefläche (12) für den Körper (11), insbesondere auch eine Schneideinheit (15) zum Schneiden des Körpers (11), **gekennzeichnet durch** ein an einem Nutzer (23) in dessen Sichtfeld anordenbares Display (28), insbesondere nach Art einer Datenbrille (24), zum Anzeigen von den Schneidprozess des Körpers (11) betreffenden Informationen.
